# EUROPÄISCHE PATENTSCHRIFT

(11) **EP 2 857 141 B1**
(45) Veröffentlichungstag und Bekanntmachung des Hinweises auf die Patenterteilung: **02.12.2020**
(21) Anmeldenummer: 13006027.0
(22) Anmeldetag: 20.12.2013
(51) Int. Cl.: B23K 35/30, B23K 9/173, B23K 35/02

(54) **VERFAHREN ZUM METALLSCHUTZGASSCHWEISSEN**
METHOD FOR METAL ARC WELDING USING PROTECTIVE GAS
PROCÉDÉ DE SOUDAGE SOUS GAZ PROTECTEUR

(30) Priorität: 02.10.2013 DE 102013016452
(43) Veröffentlichungstag der Anmeldung: 08.04.2015
(73) Patentinhaber: Linde GmbH, 82049 Pullach (DE)
(72) Erfinder: Siewert, Erwan, 80802 München (DE)
(74) Vertreter: Lu, Jing

(56) Entgegenhaltungen:
- EP-A1- 0 009 815
- EP-A2- 0 509 778
- DE-B- 1 105 537
- JP-A- H0 663 754
- DATABASE WPI Week 197725 Thomson Scientific, London, GB; AN 1977-44068Y XP002726049, -& JP S52 56036 A (KOBE STEEL LTD) 9. Mai 1977 (1977-05-09) -& JP S52 56036 A (KOBE STEEL LTD) 9. Mai 1977 (1977-05-09)

## Beschreibung

Die Erfindung betrifft ein Verfahren und eine Vorrichtung zum Metallschutzgasschweißen, wobei eine stromführende Drahtelektrode durch einen Lichtbogen aufgeschmolzen wird und wobei zum Metallschutzgasschweißen ein Schweißzusatz verwendet wird, welcher mindestens einen Bestandteil enthält, der durch Verdampfen gesundheitsschädliche Emissionen freisetzt.

### Stand der Technik

Beim Metallschutzgasschweißen (MSG-Schweißen) handelt es sich um ein Lichtbogenschweißverfahren, das beispielsweise zum Auftragsschweißen, Verschweißen oder Verlöten von ein, zwei oder mehreren Werktücken aus metallischen Werkstoffen verwendet wird. Dabei wird in einer Schutzgasatmosphäre eine Drahtelektrode in Form eines Drahtes oder eines Bandes kontinuierlich nachgeführt und durch einen Lichtbogen aufgeschmolzen, der zwischen dem Werkstück und der Drahtelektrode brennt. Das Werkstück dient dabei als zweite Elektrode. Insbesondere dient das Werkstück dabei als Kathode und die Drahtelektrode als Anode. Durch Kathodeneffekte wird das Werkstück dabei zumindest teilweise aufgeschmolzen und bildet das Schmelzbad. Die Drahtelektrode wird an ihrem Ende aufgeschmolzen und es bildet sich überwiegend durch den Lichtbogen ein schmelzflüssiger Tropfen. Durch verschiedene Kräfte löst sich der Tropfen von der Drahtelektrode ab und geht in das Schmelzbad über. Dieser Prozess aus Aufschmelzen der Drahtelektrode, Bildung des Tropfens, Ablösen des Tropfens und Interaktion des Tropfens mit dem Werkstück wird als Werkstoffübergang bezeichnet. Beim MSG-Schweißen dient die Drahtelektrode nicht nur als Lichtbogenträger, sondern auch als Schweißzusatz. Beim MSG-Schweißen von Legierungen beinhaltet die Drahtelektrode einen Schweißzusatz, der wiederum spezielle Bestandteile beinhaltet. Durch das Aufschmelzen der Drahtelektrode werden der Schweißzusatz und somit diese Bestandteile ebenfalls aufgeschmolzen und gehen in das Schmelzbad über. Derartige spezielle Bestandteile können beispielsweise für das Schweißen von hochlegierten Stählen mit Chrombestandteilen genutzt werden.

DE 11 05 537 B offenbart Verfahren zum Gleichstrom-Lichtbogenschweißen von Stahl unter einem oxydierenden Schutzgas, insbesondere Kohlendioxyd, mit einer abschmelzenden Elektrode als Kathode und mit dem Schmelzbad gesondert zugeführten metallischen Zusatzstoffen.

Durch das Aufschmelzen der Bestandteile kann es jedoch auch zum Verdampfen der Bestandteile kommen. Durch das Verdampfen der Bestandteile werden hochgradig gesundheitsschädliche Emissionen freigesetzt, die insbesondere toxisch und/oder krebserzeugend sind. Diese Emissionen können von dem Schweißer zumindest teilweise eingeatmet werden, was ein nachgewiesenes, erhebliches Gesundheitsrisiko darstellt.

Um die Belastungen und das Gesundheitsrisiko des Schweißers zu reduzieren, können Atemmasken genutzt werden und die Emissionen können teilweise mittels Absaugbrennern abgesaugt werden. Absaugbrenner besitzen jedoch große Nachteile. Absaugbrenner bedingen eine unhandlichere Bauform und stark eingeschränkte Zugänglichkeit. Des Weiteren wird die Handhabung für den Schweißer erheblich erschwert. Zudem sind die extrem feinen Partikel der Emissionen häufig nicht durch einfache Filter abzuhalten. Darüberhinaus fließen die Emissionen zumeist dicht über der Werkstoffoberfläche ab und können kaum oder überhaupt nicht von dem Absaugbrenner erfasst werden.

Der Erfindung liegt daher die Aufgabe zu Grunde, beim MSG-Schweißen von Legierungen gesundheitsschädliche Emissionen und somit das Gesundheitsrisiko für den Schweißer zu reduzieren.

### Offenbarung der Erfindung

Diese Aufgabe wird durch ein erfindungsgemäßes Verfahren zum Metallschutzgasschweißen und eine erfindungsgemäßen Vorrichtung zum Metallschutzgasschweißen mit den Merkmalen der unabhängigen Patentansprüche gelöst.

Bei einem erfindungsgemäßen Verfahren wird eine stromführende Drahtelektrode durch einen Lichtbogen aufgeschmolzen. Zum Metallschutzgasschweißen wird ein Schweißzusatz verwendet, welcher mindestens einen Bestandteil enthält, der durch Verdampfen gesundheitsschädliche Emissionen freisetzt. Erfindungsgemäß wird für die stromführende Drahtelektrode eine Zusammensetzung gewählt, die diesen Bestandteil nicht enthält. Ein stromloser Zusatzwerkstoff, der hingegen diesen Bestandteil enthält, wird erfindungsgemäß stromlos dem Lichtbogen und/oder einem Schmelzbad zugeführt.

Unter "gesundheitsschädlichen Emissionen" sind Stoffe zu verstehen, die beim Einatmen, Verschlucken oder bei der Aufnahme über die Haut beim Menschen akute oder chronische Gesundheitsschäden verursachen. Unter gesundheitsschädlichen Emissionen sind insbesondere Stoffe umfasst, die mit einer Gefahrenbezeichnung "Xn" gekennzeichnet sind. Insbesondere sind unter gesundheitsschädlichen Emissionen Stoffe zu verstehen, die giftig (Gefahrenbezeichnung "T") oder gar sehr giftig (Gefahrenbezeichnung "T+") sind. Derartige Stoffe führen insbesondere in geringer oder gar sehr geringer Menge bei Einatmen, Verschlucken oder Aufnahme über die Haut zum Tode oder verursachen akute oder chronische Gesundheitsschäden.

Ein entsprechender Bestandteil, welcher durch Verdampfen gesundheitsschädliche Emissionen freisetzt, wird in der folgenden Beschreibung als "schädlicher Bestandteil" bezeichnet. "Ein Bestandteil" wird im Sinne von ein oder mehrere Bestandteile verwendet.

Der schädlichen Bestandteil kann dabei in reiner Form vorliegen oder auch in Form von Stoffgemischen. Beispielsweise kann der schädliche Bestandteil auch ein Teil eines Stahlgemischs sein. Das Stahlgemisch hat dabei insbesondere einen hohen Anteil an dem schädlichen Bestandteil.

### Vorteile der Erfindung

Besitzt die Drahtelektrode einen entsprechenden schädlichen Bestandteil und wird dieser verdampft, werden die gesundheitsschädlichen Emissionen freigesetzt. Diese Verdampfung entsteht zumeist zu über 95% an der Drahtelektrode und nur zu 5% an dem Werkstück selbst. Erfindungsgemäß werden daher Bestandteile der Drahtelektrode separiert. Die stromführende Drahtelektrode enthält somit nicht mehr den schädlichen Bestandteil. Der schädliche Bestandteil wird als ein stromloser Zusatzwerkstoff nicht stromführend zugeführt, getrennt und unabhängig von der stromführenden Drahtelektrode und den nicht schädlichen Bestandteilen.

Die stromführende Drahtelektrode wird weiterhin im Zuge des Werkstoffübergangs durch den Lichtbogen aufgeschmolzen und bildet (schmelz-)flüssige Tropfen, die in das Schmelzbad übergehen. Gegebenenfalls wird die Drahtelektrode zwar verdampft, da aber die Drahtelektrode den schädlichen Bestandteil nicht enthält, können auch keine gesundheitsschädlichen Emissionen durch Verdampfen des schädlichen Bestandteils freigesetzt werden.

Um weiterhin den Anforderungen an die Schweißnaht bzw. an werkstoffspezifische Anforderungen zu genügen, wird der schädliche Bestandteil dennoch benötigt und muss aufgeschmolzen werden und in das Schmelzbad übergehen. Erfindungsgemäß wird der stromlose Zusatzwerkstoff, welcher den schädlichen Bestandteil enthält, stromlos bzw. nicht stromführend dem Lichtbogen und/oder dem Schmelzbad zugeführt. Der stromlose Zusatzwerkstoff und somit der schädliche Bestandteil werden dabei nur durch die Wärme des Lichtbogens bzw. durch die Wärme des Schmelzbads aufgeschmolzen. Somit wird dennoch ein Werkstoffübergang des stromlosen Zusatzwerkstoffs und somit des schädlichen Bestandteils ermöglicht und der aufgeschmolzene schädliche Bestandteil kann sich mit dem Schmelzbad vermischen. Dabei kommt es jedoch zu keiner Überhitzung und zu keiner bzw. keiner nennenswerten Verdampfung des schädlichen Bestandteils. Somit werden keine bzw. keine nennenswerten gesundheitsschädlichen Emissionen freigesetzt.

Der Schweißzusatz wird insbesondere in den stromlosen Zusatzwerkstoff und einen stromführenden Zusatzwerkstoff aufgeteilt. Der stromführende Zusatzwerkstoff enthält dabei die Stoffe des Schweißzusatzes, welche bei Verdampfung keine gesundheitsschädlichen Emissionen freisetzen. Der stromlose Zusatzwerkstoff enthält erfindungsgemäß die Stoffe des Schweißzusatzes, welche bei Verdampfung gesundheitsschädlichen Emissionen freisetzen. Insbesondere enthält die stromführende Drahtelektrode den stromführenden Zusatzwerkstoff, welcher somit stromführend zugeführt wird. Der stromführende Zusatzwerkstoff wird mit der Drahtelektrode aufgeschmolzen und kann in das Schmelzbad übergehen. Der stromlose Zusatzwerkstoff wird stromlos durch die Wärme des Lichtbogens bzw. des Schmelzbads aufgeschmolzen und kann in das Schmelzbad übergehen. Somit kann der komplette Schweißzusatz aufgeschmolzen werden und für die Fügeverbindung genutzt werden. Alternativ kann der komplette Schweißzusatz in Form des stromlosen Zusatzwerkstoffs stromlos zugeführt werden und die stromführende Drahtelektrode kann keinen Schweißzusatz enthalten.

Durch das stromlose bzw. nicht stromführende Zuführen des stromlosen Zusatzwerkstoffs ergibt sich insbesondere der im Folgenden geschilderte Vorteil der Rotationssymmetrie des Verfahrens bzw. der Vorrichtung zum MSG-Schweißen. Da der stromlose Zusatzwerkstoff stromlos zugeführt wird, muss der stromlose Zusatzwerkstoff nicht mit einer externen Strom- bzw. Spannungsquelle verbunden werden, was eine feste Verkabelung mit sich bringen würde. Durch besagte Verkabelung wäre die Bewegungsfreiheit des MSG-Schweißbrenners bzw. der Vorrichtung zum MSG-Schweißen stark beeinträchtigt. Da erfindungsgemäß der stromlose Zusatzwerkstoff stromlos zugeführt wird, ist keine derartige Verkabelung notwendig, der MSG-Schweißbrenner bzw. die Vorrichtung zum MSG-Schweißen kann beliebig rotiert und gewendet werden und es ist eine optimale Bewegungsfreiheit gegeben. Dabei spielt es keine Rolle, wie der MSG-Schweißbrenner bzw. die Vorrichtung zum MSG-Schweißen ausgerichtet ist. Der Schweißer muss somit nicht explizit darauf achten, dass der MSG-Schweißbrenner bzw. die Vorrichtung zum MSG-Schweißen in einer bestimmten Weise ausgerichtet ist. Somit ist die Flexibilität des MSG-Schweißens weiterhin gegeben. Insbesondere muss somit der MSG-Schweißbrenner bzw. die Vorrichtung zum MSG-Schweißen bei Kurvenfahrten nicht gedreht werden

Der stromlose Zusatzwerkstoff kann dabei im Wesentlichen zu 100% aus dem schädlichen Bestandteil bestehen oder auch aus mehreren schädlichen Bestandteilen bestehen. Insbesondere enthält der stromlose Zusatzwerkstoff neben dem schädlichen Bestandteil ein Stoffgemisch als Trägermaterial, beispielsweise ein Stahlgemisch. Der schädliche Bestandteil besitzt dabei insbesondere einen vergleichsweise hohen Anteil an diesem Stoffgemisch.

Da nahezu alle Emissionen (zumeist über 95%) an der stromführenden Drahtelektrode entstehen, entstehen erfindungsgemäß somit auch nahezu keine gesundheitsschädlichen Emissionen des schädlichen Bestandteils mehr. Unpraktische, sperrige und unwirtschaftliche Vorrichtungen wie Absaugbrenner werden somit nicht benötigt. Die Erfindung befasst sich somit nicht damit, die Auswirkungen der Verdampfung der schädlichen Bestandteile (namentlich die gesundheitsschädlichen Emissionen) zu bekämpfen. Die Erfindung befasst sich damit, die Ursache selbst zu bekämpfen und zu verhindern, namentlich die Verdampfung der schädlichen Bestandteile, damit es gar nicht erst zu den Emissionen kommt. Somit besteht nicht die Gefahr, dass gesundheitsschädliche Stoffe der Emissionen in die Atemwege eines Schweißers gelangen. Das Gesundheitsrisiko für den Schweißer kann somit erheblich verringert werden.

Gleichzeitig müssen keine Abstriche bei der Qualität und Effizienz gemacht werden und die Vorteile herkömmlicher MSG-Schweißverfahren (insbesondere die Rotationssymmetrie) können beibehalten werden. Insbesondere bleiben die hohe Wirtschaftlichkeit und die hohe Produktivität des MSG-Schweißverfahren erhalten, insbesondere können weiterhin eine hohe Abschmelzleistung und ein hoher Wirkungsgrad erzielt werden. Beim erfindungsgemäßen MSG-Schweißverfahren kann der Wirkungsgrad im Vergleich zu herkömmlichen MSG-Schweißverfahren sogar gesteigert werden. Weiterhin können die Kosten des MSG-Schweißverfahrens niedrig gehalten werden.

Vorteilhaft wird der stromlose Zusatzwerkstoff in Form wenigstens eines nicht stromführenden Zusatzdrahts dem Lichtbogen und/oder dem Schmelzbad zugeführt. Insbesondere kann dabei besonders präzise eingestellt werden, an welcher exakten Position der stromlose Zusatzwerkstoff dem Lichtbogen bzw. dem Schmelzbad zugeführt wird. Sollte es dabei dennoch zu unerwünschtem Freisetzen toxischer und/oder krebserzeugender Emissionen kommen, kann diese Position verändert werden, bis keine Emissionen mehr freigesetzt werden.

In einer vorteilhaften Ausgestaltung wird der Zusatzdraht bzw. werden die Zusatzdrähte parallel oder nahezu parallel zu der Drahtelektrode dem Lichtbogen und/oder dem Schmelzbad zugeführt. Unter nahezu parallel ist dabei zu verstehen, dass die Zusatzdrahtelektrode/n nur einen sehr kleinen Winkel gegenüber der Drahtelektrode, insbesondere kleiner als 1°, dem Lichtbogen und/oder dem Schmelzbad zugeführt wird/werden. Somit wird insbesondere die Rotationssymmetrie des MSG-Schweißverfahrens ermöglicht. Da der Zusatzdraht (bzw. die Zusatzdrähte) nicht stromführend ist, spielt es keine Rolle, wie der Zusatzdraht (bzw. die Zusatzdrähte) in dem MSG-Schweißbrenner bzw. in der Vorrichtung zum MSG-Schweißen angeordnet ist.

Bevorzugt kann der stromlose Zusatzwerkstoff auch in Form eines Pulvers dem Lichtbogen und/oder dem Schmelzbad zugeführt werden. Insbesondere wird das Pulver dabei über ein Rohr, eine Kapillare, eine Düse oder dergleichen zugeführt. Insbesondere wird das Pulver dabei gezielt auf bestimmte Stellen des Schmelzbads zugeführt. Somit kann gewährleistet werden, dass der stromlose Zusatzwerkstoff erst unmittelbar in dem Schmelzbad aufgeschmolzen wird.

In einer vorteilhaften Ausgestaltung wird der stromlose Zusatzwerkstoff in Form des Pulvers mit einem Schutzgas dem Lichtbogen und/oder dem Schmelzbad zugeführt. Das Schutzgas wird ohnehin beim MSG-Schweißen eingesetzt und wird ohnehin zugeführt. Somit bedarf es keiner zusätzlichen Vorrichtungen oder Umbauten, und der MSG-Schweißbrenner bzw. die Vorrichtung zum MSG-Schweißen kann ohne Veränderungen genutzt werden. Das Pulver wird mit dem Schutzgas insbesondere direkt dem Lichtbogen zugeführt. Somit wird der stromlose Zusatzwerkstoff direkt in dem Lichtbogen aufgeschmolzen.

Vorzugsweise sind unter gesundheitsschädlichen Emissionen Stoffe zu verstehen, die krebserzeugend (kanzerogen), erbgutverändernd (mutagen) und/oder fortpflanzungsgefährdend (reprotoxisch) wirken. Derartige Stoffe werden auch als CMR-Stoffe bezeichnet. Weiterhin sind Stoffe umfasst, die toxisch-irritativ, atemwegsbelastend, allergisierend und/oder fibrogen wirken. Unter gesundheitsschädlichen Emissionen sind insbesondere Stoffe zu verstehen, die hochgradig gesundheitsgefährdend sind und die Gesundheit des Schweißers in höchstem Maße gefährden. Insbesondere lösen die gesundheitsschädlichen Emissionen schwere, gegebenenfalls nicht heilbare Erkrankungen aus, wie Krebs oder Parkinson.

Die gesundheitsschädlichen Emissionen enthalten einen oder mehrere der folgenden Stoffe: Chrom, Kupfer, Mangan, Nickel, Kobalt, Beryllium, Cadmium, Zink, Molybdän, Blei, Barium, Fluor, Magnesium. Des Weiteren können die gesundheitsschädlichen Emissionen auch Verbindungen dieser Stoffe, insbesondere deren Oxide und/oder Fluoride, enthalten. Insbesondere enthalten die Emissionen Manganoxid und/oder Kupferoxid, welche toxisch und/oder toxisch-irritativ sind. Mangan steht dabei in Verdacht, Parkinson auszulösen. Mangan ist insbesondere als schädlicher Bestandteil für MSG-Schweißen von Baustahl von Bedeutung. Insbesondere enthalten die Emissionen Nickeloxide und/oder Chrom(VI)-Verbindungen, welche krebserzeugend sind. Chrom und Nickel sind insbesondere als schädlicher Bestandteil für hochlegierten Stahl von Bedeutung. Insbesondere wird durch die Erfindung MSG-Schweißen von Legierungen mit Chrombestandteilen ohne erhebliches Gesundheitsrisiko für den Schweißer ermöglicht. Bevorzugt besteht der schädliche Bestandteil zu 64% aus Chrom und zu 36% aus Nickel. Der stromlose Zusatzwerkstoff enthält insbesondere diesen besagten Bestandteil und kann weiterhin ein Trägermaterial, insbesondere ein Stahlgemisch oder Eisen, enthalten.

Die Drahtelektrode besteht im Wesentlichen zu 100% aus Eisen. Die Erfindung betrifft weiterhin eine Vorrichtung zum Metallschutzgasschweißen, sowie eine Verwendung eines stromlosen Zusatzwerkstoffs beim Metallschutzgasschweißen. Ausgestaltungen dieser erfindungsgemäßen Vorrichtung und dieser erfindungsgemäßen Verwendung ergeben sich aus der obigen Beschreibung des erfindungsgemäßen Verfahrens in analoger Art und Weise.

Die Vorrichtung weist eine Stromkontakthülse auf, in welcher die stromführende Drahtelektrode und eine Zuführung enthalten sind. Die Zuführung ist dazu eingerichtet, den stromlosen Zusatzwerkstoff in Form mindestens eines Zusatzdrahts und/oder in Form eines Pulvers zuzuführen. Diese Zuführung ist dabei gegen die Stromkontakthülse elektrisch isoliert. Die Stromkontakthülse dient zur Bestromung der stromführenden Drahtelektrode. Die Stromkontakthülse ist ohnehin vorhanden. Daher bietet es sich insbesondere an, die Zuführung in der Stromkontakthülse zu integrieren. Um zu gewährleisten, dass der stromlose Zusatzwerkstoff stromlos zugeführt wird, wird die Zuführung daher elektrisch isoliert. Insbesondere ist die Zuführung dabei mit einem Nichtleiter umgeben. Alternativ oder zusätzlich kann die Zuführung auch selbst aus einem Nichtleiter ausgebildet bzw. geformt sein. Bevorzugt ist die Zuführung dabei aus Keramik ausgebildet bzw. geformt.

Die Erfindung und ihre Vorteile werden nun anhand der beigefügten Zeichnung weiter erläutert. In dieser zeigt
- Figur 1: schematisch eine erste bevorzugte Ausgestaltung einer erfindungsgemäßen Vorrichtung zum Metallschutzgasschweißen, die dazu eingerichtet ist, eine Ausführungsform eines erfindungsgemäßen Verfahrens durchzuführen,
- Figur 2: schematisch eine zweite bevorzugte Ausgestaltung einer erfindungsgemäßen Vorrichtung zum Metallschutzgasschweißen, die dazu eingerichtet ist, eine Ausführungsform eines erfindungsgemäßen Verfahrens durchzuführen,
- Figur 3: schematisch eine Ausgestaltung einer Stromkontakthülse einer erfindungsgemäßen Vorrichtung zum Metallschutzgasschweißen, die dazu eingerichtet ist, eine Ausführungsform eines erfindungsgemäßen Verfahrens durchzuführen.

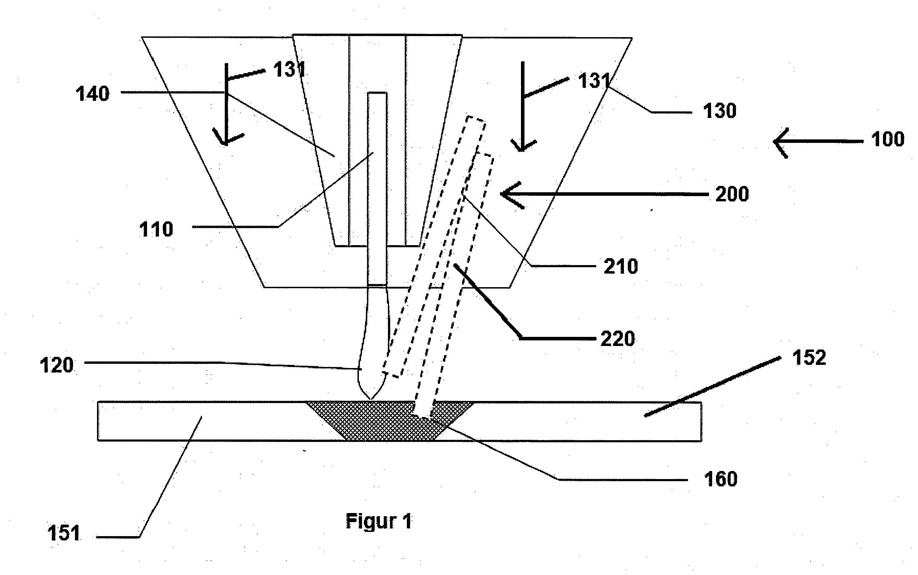

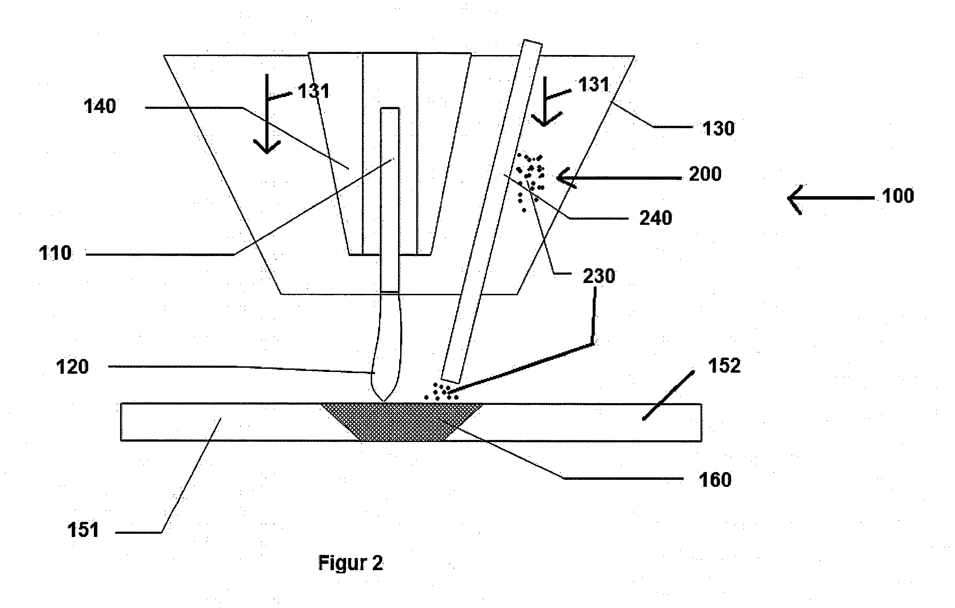

In den Figuren 1 und 2 ist jeweils auf analoge Weise ein Metallschutzgasschweißgerät (MSG-Schweißgerät) als eine Vorrichtung zum Metallschutzgasschweißen (MSG-Schweißen) schematisch dargestellt und mit 100 bezeichnet. Identische Bezugszeichen in den Figuren 1 und 2 beziehen sich dabei auf identische Elemente.

Mittels des MSG-Schweißgeräts 100 wird durch einen Fügevorgang ein erstes Werkstück 151 mit einem zweiten Werkstück 152 verschweißt. Das MSG-Schweißgerät 100 weist eine stromführende Drahtelektrode 110 in Form eines Drahts auf, der von einer Stromkontakthülse 140 umschlossen ist. Zwischen dem ersten Werkstück 151 und der Stromkontaktdüse 140 ist eine elektrische Spannung angelegt (nicht dargestellt). Über die Stromkontaktdüse 140 fließt elektrischer Strom in die Drahtelektrode 110. Die Drahtelektrode 110 ist daher stromführend.

Ein Lichtbogen 120 wird durch Kontaktzündung initiiert und brennt zwischen der stromführenden Drahtelektrode 110 und dem ersten Werkstück 151. Durch die hohen Temperaturen wird die Drahtelektrode 110 an ihrer Spitze aufgeschmolzen. Somit bildet sich ein Tropfen aufgeschmolzenen Drahts. Letztendlich löst sich der Tropfen von der Drahtelektrode 110, geht in ein Schmelzbad 160 über und bildet die Schweißnaht (Fügeverbindung zwischen den Werkstücken 151 und 152). Der Draht 110 wird dabei kontinuierlich nachgeführt. Die Bildung des Tropfens sowie das Ablösen des Tropfens von der Drahtelektrode 110 und der Übergang in das Schmelzbad 160 werden als Werkstoffübergang bezeichnet. Das MSG-Schweißgerät 100 weist weiterhin eine Schutzgasdüse 130 auf, um Schutzgas (in Menge und Zusammensetzung konstant) zuzuführen, angedeutet durch Bezugszeichen 131.

Das MSG-Schweißgerät 100 wird verwendet, um hochlegierte Stähle mit Chrombestandteilen zu verschweißen. Dazu muss Chrom als Schweißzusatz aufgeschmolzen und dem Schmelzbad 160 zugeführt werden. Chrom ist in diesem Beispiel ein schädlicher Bestandteil, der durch Verdampfung krebserzeugende Emissionen in Form von Chrom(VI)-Verbindungen freisetzt. Alternativ oder zusätzlich kann insbesondere auch Nickel ein derartiger schädlicher Bestandteil des Schweißzusatzes sein, der durch Verdampfung krebserzeugende Emissionen in Form von Nickeloxiden freisetzt. Alternativ oder zusätzlich können insbesondere auch Mangan und/oder Kupfer ein derartiger schädlicher Bestandteil des Schweißzusatzes sein, der durch Verdampfung toxische Emissionen in Form von Manganoxid und/oder Kupferoxiden freisetzt. Ohne Beschränkung der Allgemeinheit wird in dem folgenden Beispiel Chrom als schädlicher Bestandteil betrachtet, der durch Verdampfen gesundheitsschädliche Emissionen freisetzt.

Um zu verhindern, dass krebserzeugenden Emissionen freigesetzt werden, weist die Drahtelektrode 110 kein Chrom auf. Durch einen konzentrierten Ansatz des Lichtbogens 120 an der Drahtelektrode wird der Werkstoffübergang der Drahtelektrode 110 ermöglicht. Dabei kann es zu einer Überhitzung der Drahtelektrode 110 kommen. Würde die Drahtelektrode 110 Chrom enthalten, würde das Chrom durch die Überhitzung der Drahtelektrode 110 verdampfen und krebserzeugende Emissionen freisetzen.

Erfindungsgemäß wird das Chrom daher separat, getrennt und unabhängig von der stromführenden Drahtelektrode 110 zugeführt, in Form eines stromlosen Zusatzwerkstoffs 200. Der stromlose Zusatzwerkstoff 200 wird dabei stromlos bzw. nicht stromführend zugeführt.

In Figur 1 und Figur 2 ist jeweils eine unterschiedliche bevorzugte Ausgestaltung dargestellt, den stromlosen Zusatzwerkstoff 200 zuzuführen.

In Figur 1 ist der stromlose Zusatzwerkstoff 200 in Form von nicht stromführenden Zusatzdrähten 210 bzw. 220 ausgebildet. Die Zusatzdrähte 210 bzw. 220 können dabei insbesondere in ihrer Position und Ausrichtung verändert werden. Somit kann insbesondere eingestellt werden, an welcher Stelle der stromlose Zusatzwerkstoff 200 zugeführt wird.

Der Zusatzdraht 210 ist dabei auf den Lichtbogen 120 positioniert und ausgerichtet. Somit wird der Zusatzwerkstoff 200 dem Lichtbogen 120 zugeführt. Der Zusatzdraht 210 wird durch die Wärme des Lichtbogens 120 aufgeschmolzen. Somit kann der stromlose Zusatzwerkstoff 200 in das Schmelzbad 160 übergehen.

Der Zusatzdraht 220 ist auf das Schmelzbad 160 positioniert und ausgerichtet. Somit wird der stromlose Zusatzwerkstoff 200 dem Schmelzbad 160 zugeführt. Der Zusatzdraht 220 wird durch die Wärme des Schmelzbads 160 aufgeschmolzen. Somit kann der stromlose Zusatzwerkstoff 200 in das Schmelzbad 160 übergehen.

In Figur 2 ist der stromlose Zusatzwerkstoff 200 in Form eines Pulvers 230 ausgebildet. Das Pulver 230 kann auf zwei bevorzugte Arten zugeführt werden. Einerseits kann das Pulver 230 über die Schutzgasdüse 130 zusammen mit dem Schutzgas 131 zugeführt werden. Dabei wird das Pulver 230 zusammen mit dem Schutzgas 131 insbesondere dem Lichtbogen 120 zugeführt.

Alternativ oder zusätzlich kann ein Rohr bzw. eine Kapillare 240 vorgesehen sein, durch welche das Pulver 230 zugeführt wird. Dabei wird das Pulver 230 über das Rohr bzw. eine Kapillare 240 insbesondere direkt dem Schmelzbad 160 zugeführt.

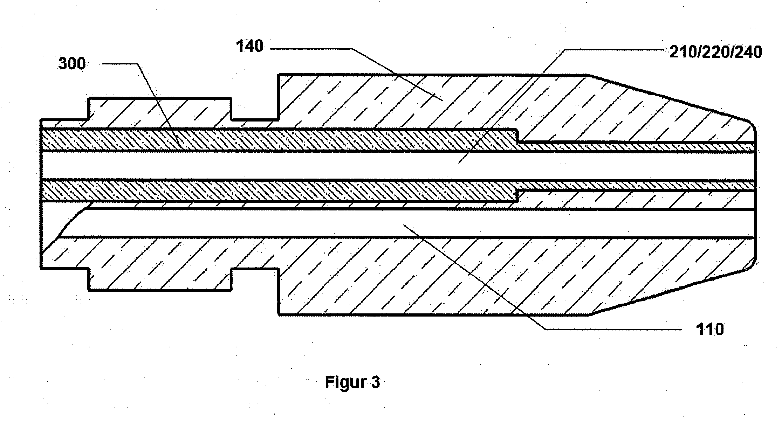

In Figur 3 ist eine bevorzugte Ausgestaltung der Stromkontakthülse 140 schematisch dargestellt. Identische Bezugszeichen in den Figuren 1, 2 und 3 beziehen sich auf identische Elemente.

In der Stromkontakthülse 140 ist dabei die stromführende Drahtelektrode 110 enthalten. Zusätzlich ist in der Stromkontakthülse 140 eine Zuführung 300 enthalten. Die Zuführung 300 ist dazu eingerichtet, den stromlosen Zusatzwerkstoff 200 zuzuführen. In dem Beispiel von Figur 2 umschließt die die Zuführung 300 dabei beispielsweise den Zusatzdraht 210/220 oder bildet das Rohr/die Kapillare 240. Die Stromkontakthülse 140 kann dabei auch mehrere dieser Zuführungen 300 enthalten. Die Zuführung 300 ist des Weiteren dazu eingerichtet, den Zusatzdraht 210/220 bzw. das Rohr/die Kapillare 240 elektrisch gegen die Stromkontakthülse zu isolieren, und dient somit als (elektrische) Isolation. Die Zuführung 300 ist dabei bevorzugt aus einem elektrisch nicht leitenden Material, vorzugsweise Keramik, ausgebildet.

### Bezuqszeichenliste

- 100: Metallschutzgasschweißgerät
- 110: stromführende Drahtelektrode
- 120: Lichtbogen
- 130: Schutzgasdüse
- 131: Schutzgas
- 140: Stromkontakthülse
- 151: erstes Werkstück
- 152: zweites Werkstück
- 160: Schmelzbad

- 200: stromloser Zusatzwerkstoff
- 210: Zusatzdraht
- 220: Zusatzdraht
- 230: Pulver
- 240: Rohr/Kapillare

- 300: Zuführung/Isolation

## Patentansprüche

1. Verfahren zum Metallschutzgasschweißen,
- wobei eine stromführende Drahtelektrode (110) durch einen Lichtbogen (120) aufgeschmolzen wird und
- wobei zum Metallschutzgasschweißen ein Schweißzusatz verwendet wird, welcher mindestens einen Bestandteil enthält, der durch Verdampfen gesundheitsschädliche Emissionen freisetzt, wobei
- für die Drahtelektrode (110) eine Zusammensetzung gewählt wird, die diesen Bestandteil nicht enthält, und wobei die Drahtelektrode (110) m Wesentlichen zu 100% aus Eisen besteht, und
- ein stromloser Zusatzwerkstoff (200), der diesen Bestandteil enthält, nicht stromführend dem Lichtbogen (120) und/oder einem Schmelzbad (160) zugeführt wird, wobei die gesundheitsschädlichen Emissionen einen oder mehrere der folgenden Stoffe und/oder deren Verbindungen, insbesondere deren Oxide, enthalten: Chrom, Kupfer, Mangan, Nickel, Kobalt, Beryllium, Cadmium, Zink, Molybdän, Blei, Barium, Fluor, Magnesium, **dadurch gekennzeichnet, dass** eine Stromkontakthülse (140) vorgesehen ist, in welcher die stromführende Drahtelektrode (110) und eine Zuführung (300) für den mindestens einen Zusatzdraht (210) und/oder für das Pulver (240) enthalten sind und wobei der mindestens eine Zusatzdraht (210) parallel oder nahezu parallel zu der Drahtelektrode (110) dem Lichtbogen (120) und/oder dem Schmelzbad (160) zugeführt wird, wobei die Zuführung (300) gegen die Stromkontakthülse elektrisch isoliert ist.

2. Verfahren nach Anspruch 1, wobei der stromlose Zusatzwerkstoff (200) in Form wenigstens eines nicht stromführenden Zusatzdrahts (210) dem Lichtbogen (120) und/oder dem Schmelzbad (160) zugeführt wird.

3. Verfahren nach einem der vorstehenden Ansprüche, wobei der stromlose Zusatzwerkstoff (200) in Form eines Pulvers (230) dem Lichtbogen (120) und/oder dem Schmelzbad (160) zugeführt wird.

4. Verfahren nach Anspruch 3, wobei der stromlose Zusatzwerkstoff (200) in Form des Pulvers (240) mit einem Schutzgas (130) dem Lichtbogen (120) und/oder dem Schmelzbad (160) zugeführt wird.

5. Verfahren nach einem der vorstehenden Ansprüche, wobei die gesundheitsschädlichen Emissionen Stoffe umfassen, die krebserzeugend, erbgutverändernd, fortpflanzungsgefährdend, toxisch-irritativ, atemwegsbelastend, allergisierend und/oder fibrogen wirken.

6. Verfahren nach einem der vorstehenden Ansprüche, wobei der gesundheitsschädliche Bestandteil im Wesentlichen zu 64% aus Chrom und zu 36% aus Nickel besteht.

7. Vorrichtung zum Metallschutzgasschweißen aufweisend eine stromführende Drahtelektrode (110), wobei eine Vorrichtung zum Zuführen eines stromlosen Zusatzwerkstoffs (200) vorhanden ist, wobei der stromlose Zusatzwerkstoff (200) einen Bestandteil enthält, der durch Verdampfen gesundheitsschädliche Emissionen freisetzt, wobei die gesundheitsschädlichen Emissionen einen oder mehrere der folgenden Stoffe und/oder deren Verbindungen, insbesondere deren Oxide, enthalten: Chrom, Kupfer, Mangan, Nickel, Kobalt, Beryllium, Cadmium, Zink, Molybdän, Blei, Barium, Fluor, Magnesium,
- die Vorrichtung zum Zuführen des stromlosen Zusatzwerkstoffs (200) dazu eingerichtet ist, den stromlosen Zusatzwerkstoff (200) nicht stromführend dem Lichtbogen (120) und/oder einem Schmelzbad (160) zuzuführen und
- die stromführende Drahtelektrode (110) diesen Bestandteil nicht enthält, wobei die Drahtelektrode im Wesentlichen zu 100% aus Eisen besteht, **dadurch gekennzeichnet, dass** eine Stromkontakthülse (140) vorgesehen ist, in welcher die stromführende Drahtelektrode (110) und eine Zuführung (300) für den mindestens einen Zusatzdraht (210) und/oder für das Pulver (240) enthalten sind und wobei der mindestens eine Zusatzdraht (210) parallel oder nahezu parallel zu der Drahtelektrode (110) dem Lichtbogen (120) und/oder dem Schmelzbad (160) zugeführt wird, wobei die Zuführung (300) gegen die Stromkontakthülse elektrisch isoliert ist.

8. Vorrichtung nach Anspruch 7, wobei der stromlose Zusatzwerkstoff (200) als mindestens ein Zusatzdraht (210) und/oder als ein Pulver (240) ausgebildet ist.

9. Vorrichtung nach Anspruch 7, wobei die Zuführung (300) aus Keramik ausgebildet ist.

10. Verwendung eines stromlosen Zusatzwerkstoffs beim Metallschutzgasschweißen,
- wobei eine stromführende Drahtelektrode (110) durch einen Lichtbogen (120) aufgeschmolzen wird und
- wobei zum Metallschutzgasschweißen ein Schweißzusatz verwendet wird, der mindestens ein Bestandteil enthält, der durch Verdampfen gesundheitsschädliche Emissionen freisetzt, wobei die gesundheitsschädlichen Emissionen einen oder mehrere der folgenden Stoffe und/oder deren Verbindungen, insbesondere deren Oxide, enthalten: Chrom, Kupfer, Mangan, Nickel, Kobalt, Beryllium, Cadmium, Zink, Molybdän, Blei, Barium, Fluor, Magnesium,
- wobei
- die stromführende Drahtelektrode (110) eine Zusammensetzung aufweist, die diesen Bestandteil nicht enthält und wobei die Drahtelektrode im Wesentlichen zu 100% aus Eisen besteht,
- der stromlose Zusatzwerkstoff (200) diesen Bestandteil enthält und nicht stromführend dem Lichtbogen (120) und/oder einem Schmelzbad (160) zugeführt wird, um eine Freisetzung der gesundheitsschädlichen Emissionen zu verhindern,
- **dadurch gekennzeichnet, dass** eine Stromkontakthülse (140) vorgesehen ist, in welcher die stromführende Drahtelektrode (110) und eine Zuführung (300) für den mindestens einen Zusatzdraht (210) und/oder für das Pulver (240) enthalten sind und wobei der mindestens eine Zusatzdraht (210) parallel oder nahezu parallel zu der Drahtelektrode (110) dem Lichtbogen (120) und/oder dem Schmelzbad (160) zugeführt wird, wobei die Zuführung (300) gegen die Stromkontakthülse elektrisch isoliert ist.

## Claims

1. Method for metal arc welding using protective gas,
- wherein a current-carrying wire electrode (110) is melted by an arc (120), and
- wherein, for metal arc welding using protective gas, a welding filler is used which contains at least one constituent which releases harmful emissions by evaporation,
wherein
- for the wire electrode (110), a composition is chosen which does not contain this constituent, and wherein the wire electrode (110) essentially consists of 100 % iron, and
- a currentless filler material (200) containing this constituent is fed to the arc (120) and/or a weld pool (160) in a non-current-carrying manner, wherein the harmful emissions contain one or more of the following substances and/or their compounds, in particular their oxides: chromium, copper, manganese, nickel, cobalt, beryllium, cadmium, zinc, molybdenum, lead, barium, fluorine, magnesium,
**characterized in that** an electrical contact sleeve (140) is provided, in which the current-carrying wire electrode (110) and a lead (300) for the at least one additional wire (210) and/or for the powder (240) are contained, and wherein the at least one additional wire (210) is fed to the arc (120) and/or the weld pool (160) in parallel or virtually in parallel to the wire electrode (110), wherein the lead (300) is electrically insulated against the electrical contact sleeve.

2. Method according to claim 1, wherein the currentless filler material (200) is fed to the arc (120) and/or the weld pool (160) in the form of at least one non-current-carrying additional wire (210).

3. Method according to one of the preceding claims, wherein the currentless filler material (200) is fed to the arc (120) and/or the weld pool (160) in the form of a powder (230).

4. Method according to claim 3, wherein the currentless filler material (200) is fed to the arc (120) and/or the weld pool (160) in the form of the powder (240) with a protective gas (130).

5. Method according to one of the preceding claims, wherein the harmful emissions comprise substances which are carcinogenic, mutagenic, toxic for reproduction, toxically irritative, allergenic, fibrogenic, and/or cause respiratory ailments.

6. Method according to one of the preceding claims, wherein the harmful constituent essentially consists of 64 % chromium and 36 % nickel.

7. Device for metal arc welding using protective gas, comprising a current-carrying wire electrode (110),
wherein a device for feeding a currentless filler material (200) is present, wherein the currentless filler material (200) contains a constituent which releases harmful emissions by evaporation, wherein the harmful emissions contain one or more of the following substances and/or their compounds, in particular their oxides: chromium, copper, manganese, nickel, cobalt, beryllium, cadmium, zinc, molybdenum, lead, barium, fluorine, magnesium,
- the device for feeding the currentless filler material (200) is designed to feed the currentless filler material (200) to the arc (120) and/or a weld pool (160) in a non-current-carrying manner, and
- the current-carrying wire electrode (110) does not contain this constituent, wherein the wire electrode essentially consists of 100 % iron,
**characterized in that** an electrical contact sleeve (140) is provided in which the current-carrying wire electrode (110) and a lead (300) for the at least one additional wire (210) and/or for the powder (240) are contained, and wherein the at least one additional wire (210) is fed to the arc (120) and/or the weld pool (160) in parallel or virtually in parallel to the wire electrode (110), wherein the lead (300) is electrically insulated against the electrical contact sleeve.

8. Device according to claim 7, wherein the currentless filler material (200) is formed as at least one additional wire (210) and/or as a powder (240).

9. Device according to claim 7, wherein the lead (300) is made of ceramic.

10. Use of a currentless filler material in metal arc welding using protective gas,
- wherein a current-carrying wire electrode (110) is melted by an arc (120), and
- wherein for metal arc welding using protective gas, a welding filler is used which contains at least one constituent which releases harmful emissions by evaporation, wherein the harmful emissions contain one or more of the following substances and/or their compounds, in particular their oxides: chromium, copper, manganese, nickel, cobalt, beryllium, cadmium, zinc, molybdenum, lead, barium, fluorine, magnesium,
- wherein
- the current-carrying wire electrode (110) has a composition that does not contain this constituent, and wherein the wire electrode essentially consists of 100 % iron,
- the currentless filler material (200) contains this constituent and is fed to the arc (120) and/or a weld pool (160) in a non-current-carrying manner, in order to prevent a release of the harmful emissions,
- **characterized in that** an electrical contact sleeve (140) is provided, in which the current-carrying wire electrode (110) and a lead (300) for the at least one additional wire (210) and/or for the powder (240) are contained, and wherein the at least one additional wire (210) is supplied to the arc (120) and/or the weld pool (160) in parallel or virtually in parallel to the wire electrode (110), wherein the lead (300) is electrically insulated against the electrical contact sleeve.

## Revendications

1. Procédé de soudage sous gaz protecteur,
- dans lequel un fil-électrode conducteur (110) est fondu par un arc électrique (120) et
- dans lequel un métal d'apport est utilisé pour le soudage sous gaz protecteur, lequel contient au moins un composant qui libère par évaporation des émissions nocives,
dans lequel
- pour le fil-électrode (110), une composition est sélectionnée, qui ne contient pas ce composant et dans lequel le fil-électrode (110) est constitué essentiellement à 100 % de fer et
- un matériau additif sans courant (200), qui contient ce composant, est apporté de manière non conductrice à l'arc électrique (120) et/ou à un bain de fusion (160), dans lequel les émissions nocives contiennent une ou plusieurs des matières suivantes et/ou leurs composés, en particulier leur oxyde : chrome, cuivre, manganèse, nickel, cobalt, béryllium, cadmium, zinc, molybdène, plomb, baryum, fluor, magnésium,
**caractérisé en ce qu'**une douille de contact électrique (140) est prévue, dans laquelle le fil-électrode conducteur (110) et une alimentation (300) pour l'au moins un fil additif (210) et/ou pour la poudre (240) sont contenus, et dans lequel l'au moins un fil additif (210) est amené à l'arc électrique (120) et/ou au bain de fusion (160) parallèlement ou quasi-parallèlement au fil-électrode (110), dans lequel l'alimentation (300) est isolée électriquement de la douille de contact électrique.

2. Procédé selon la revendication 1, dans lequel le matériau additif sans courant (200) est amené à l'arc électrique (120) et/ou au bain de fusion (160) sous la forme d'au moins un fil additif non conducteur (210).

3. Procédé selon l'une quelconque des revendications précédentes, dans lequel le matériau additif sans courant (200) est amené à l'arc électrique (120) et/ou au bain de fusion (160) sous la forme d'une poudre (230).

4. Procédé selon la revendication 3, dans lequel le matériau additif sans courant (200) est amené à l'arc électrique (120) et/ou au bain de fusion (160) sous la forme de la poudre (240) avec un gaz protecteur (130).

5. Procédé selon l'une quelconque des revendications précédentes, dans lequel les émissions nocives comprennent des matières qui ont des effets cancérigènes, mutagènes, toxiques pour la reproduction, toxi-irritatifs, dangereux pour les voies respiratoires, allergisants et/ou fibrogènes.

6. Procédé selon l'une quelconque des revendications précédentes, dans lequel le composant nocif est constitué essentiellement à 64 % de chrome et à 36 % de nickel.

7. Dispositif de soudage sous gaz protecteur présentant un fil-électrode conducteur (110),
dans lequel un dispositif d'alimentation en matériau additif sans courant (200) est présent, dans lequel le matériau additif sans courant (200) contient un composant qui libère par évaporation des émissions nocives, dans lequel les émissions nocives contiennent une ou plusieurs des matières suivantes et/ou leurs composés, en particulier leur oxyde : chrome, cuivre, manganèse, nickel, cobalt, béryllium, cadmium, zinc, molybdène, plomb, baryum, fluor, magnésium,
- le dispositif d'alimentation en matériau additif sans courant (200) est conçu pour alimenter le matériau additif sans courant (200) à l'arc électrique (120) et/ou au bain de fusion (160) de manière non conductrice et
- le fil-électrode conducteur (110) ne contient pas ce composant, dans lequel le fil-électrique est constitué essentiellement à 100 % de fer,
**caractérisé en ce qu'**une douille de contact électrique (140) est prévue, dans laquelle le fil-électrode conducteur (110) et une alimentation (300) pour l'au moins un fil additif (210) et/ou pour la poudre (240) sont contenus, et dans lequel l'au moins un fil additif (210) est amené à l'arc électrique (120) et/ou au bain de fusion (160) parallèlement ou quasi-parallèlement au fil-électrode (110), dans lequel l'alimentation (300) est isolée électriquement de la douille de contact électrique.

8. Dispositif selon la revendication 7, dans lequel le matériau additif sans courant (200) est conçu comme au moins un fil additif (210) et/ou comme une poudre (240).

9. Dispositif selon la revendication 7, dans lequel l'alimentation (300) est conçue en céramique.

10. Utilisation d'un matériau additif sans courant lors d'un soudage sous gaz protecteur,
- dans laquelle un fil-électrode conducteur (110) est fondu par un arc électrique (120) et
- dans laquelle un métal d'apport est utilisé pour le soudage sous gaz protecteur, lequel contient au moins un composant, qui libère par évaporation des émissions nocives, dans laquelle les émissions nocives contiennent une ou plusieurs des matières suivantes et/ou leurs composés, en particulier leur oxyde : chrome, cuivre, manganèse, nickel, cobalt, béryllium, cadmium, zinc, molybdène, plomb, baryum, fluor, magnésium,
- dans laquelle
- le fil-électrode conducteur (110) présente une composition qui ne contient pas ce composant et dans laquelle le fil-électrode est constitué essentiellement à 100 % de fer,
- le matériau additif sans courant (200) contient ce composant et est alimenté à l'arc électrique (120) et/ou au bain de fusion (160) d'une manière non conductrice, afin d'éviter la libération des émissions nocives,
- **caractérisée en ce qu'**une douille de contact électrique (140) est prévue, dans laquelle le fil-électrode conducteur (110) et une alimentation (300) pour l'au moins un fil additif (210) et/ou pour la poudre (240) sont contenus et dans laquelle l'au moins un fil additif (210) est amené à l'arc électrique (120) et/ou au bain de fusion (160) parallèlement ou quasi-parallèlement au fil-électrode (110), dans laquelle l'alimentation (300) est isolée électriquement de la douille de contact électrique.
